# FASCICULE DE BREVET EUROPEEN

(11) **EP 0 580 506 B1**
(45) Date de publication et mention de la délivrance du brevet: **01.07.1998**
(21) Numéro de dépôt: 93401883.9
(22) Date de dépôt: 21.07.1993
(51) Int. Cl.: H01M 6/14, H01M 4/36

(54) **Pile au lithium à cathode liquide**
Lithium-Zelle mit flüssiger Kathode
Lithium cell with liquid cathode

(30) Priorité: 23.07.1992 FR 9209088
(43) Date de publication de la demande: 26.01.1994
(73) Titulaire: ALCATEL ALSTHOM COMPAGNIE GENERALE D'ELECTRICITE, 75008 Paris (FR)
(72) Inventeur: Simon, Bernard, F-75016 Paris (FR)
(74) Mandataire: Fournier, Michel

(56) Documents cités:
- EP-A- 0 131 822
- DE-A- 2 263 115
- DE-A- 3 122 080
- GB-A- 2 108 312
- US-A- 4 495 266
- JOURNAL OF POWER SOURCES vol. 26, no. 3/4, 16 Mai 1989 pages 427 - 433 V.S.BAGOTSKY 'MACROKINETIC STUDY OF THIONYL CHLORIDE REDUCTION ON POROUS CARBON ELECTRODES'

## Description

Cette invention concerne une pile au lithium à cathode liquide comportant une électrode de carbone sur laquelle l'électrolyte vient se réduire au cours de la décharge.

Ce type de pile au lithium, dite "à cathode liquide", constitue un générateur primaire de forte densité d'énergie et de puissance. Car, contrairement aux générateurs classiques dont les deux électrodes sont séparées par l'électrolyte inerte, l'oxydant est l'électrolyte lui-même qui est en contact direct avec l'anode de lithium; l'autre électrode joue le rôle de collecteur de courant et de site réactionnel. Au cours de la réduction de l'électrolyte (SOCl₂, SO₂Cl₂, SO₂+LiAlCl₄, etc...) les produits de réaction (LiCl, etc...) précipitent à la surface de l'électrode positive ce qui provoque son colmatage et réduit sa durée de vie.

Les chercheurs se sont donc attachés à retarder au maximum ce colmatage, et se sont intéressés notamment aux deux paramètres importants que sont la surface spécifique et la porosité de l'électrode.

L'emploi de noirs de carbone de très grande surface spécifique permet d'obtenir des capacités déchargées élevées car les produits de la réaction sont répartis sur une surface importante. Néanmoins, il existe une limite théorique à la surface active accessible. De plus, on se heurte à des problèmes de mise en forme et de tenue mécanique de l'électrode lorsque la surface spécifique est élevée, à partir de 500m²/g. La plupart des noirs de carbone existants ayant déjà été testés, il y a peu de progrès à attendre de la part de ces composés.

L'utilisation de la totalité du volume interne disponible dépend de la maîtrise du dépôt des produits de réaction; elle est corrélée au volume poreux et à la distribution des pores.

La modification des propriétés physiques de l'électrode a été tentée par l'ajout de nickel carbonyl sans amélioration des performances (Proc. Mat. and Process for Li Batt., 1989).

L'addition de porophores, tels que (NH₄)₂CO₃, et NH₄HCO₃ (J. Electrochem. Soc., 132 (1985) 2044), permet l'amélioration de l'accessibilité du volume poreux interne, en particulier à fortes densités de courant. Mais leur effet est limité par les caractéristiques intrinsèques du carbone utilisé.

Il existe également un effet catalytique du noir de carbone, lié à son activité spécifique et à sa surface interne. Celui-ci peut être renforcé par l'ajout d'un métal finement dispersé.

Les brevets US-4 167 608 et US-4 262 065 décrivent une pile Li/SOCl2 avec un collecteur de courant en carbone dans lequel est dispersé du cuivre finement divisé; celui-ci est introduit afin d'abaisser l'impédance, et réduire les risques d'explosion dus à la réaction du soufre élémentaire avec le lithium. L'ajout de poudre de fer (FR-2 539 250), de nickel, cobalt, manganèse, chrome (US-4 264 687), et de platine dispersé (US-4 272 593), sont également évoqués. Mais la capacité est améliorée seulement aux faibles densités de courant. De plus ces métaux réagissent avec l'électrolyte pour former des produits non-conducteurs, tels que des chlorures, qui colmatent la cathode, ou des produits solubles dans l'électrolyte qui vont corroder l'anode .

D'autres additifs tels que des halogénures de métaux de transition ont également été envisagés.

Des électrodes comportant des halogénures, oxyhalogénures, ou chalcogénures métalliques, et 10 à 12% de carbone, sont évoqués dans le brevet GB-2 142 469.

Une cathode composée de CuCl₂ (60 à 80%) et de carbone (10 à 30%) a été décrite dans le brevet US-4 515 875. Une réaction d'oxydo-réduction CuCl ⇄ CuCl₂ se produit plus rapidement et à un potentiel plus élevé que la précipitation de LiCl, mais les chlorures formés se dissolvent progressivement dans l'électrolyte, en particulier si la température s'élève pendant la décharge.
Enfin, des carbones modifiés par traitement de surface ont été décrits dans le brevet US-4 835 074; une liaison covalente est établie entre le carbone préoxydé et une fonction azotée qui permet une amélioration de l'ordre de 5% des performances, ce qui est encore faible.

La présente invention a pour but d'augmenter l'énergie volumique des piles au lithium à cathode liquide, en élevant la tension moyenne et en augmentant la capacité déchargée. Pour augmenter la capacité, il faut prolonger la durée de la décharge en retardant le colmatage de l'électrode.

L'objet de la présente invention est une pile au lithium à cathode liquide comportant un électrolyte et une électrode à base de carbone, caractérisé par le fait que ladite électrode est composée d'un mélange d'un matériau carboné et d'un liant auquel est ajouté un composé électroactif dont le potentiel de réduction est supérieur à 3 Volts mesurés par rapport à une électrode de lithium et qui se réduit à un potentiel supérieur au potentiel de réduction dudit électrolyte, la proportion dudit composé électroactif étant comprise entre 10% et 80% en poids dudit mélange, et ledit composé étant choisi parmi un oxyde lithié d'un métal de transition, un sulfure à intercalation, un mélange desdits oxydes et/ou desdits sulfures, un polymère conducteur, un polymère rédox, et un mélange desdits polymères.

Le matériau carboné est destiné à conférer une surface spécifique élevée à l'électrode et le liant a pour rôle de lui donner sa cohésion; un composé plus oxydant que la "cathode liquide" leur est ajouté qui va se réduire à un potentiel supérieur à celui de l'électrolyte, par exemple en intercalant des cations dans sa structure. L'ajout dudit matériau électroactif permet aussi d'ouvrir la porosité de l'électrode par la présence de grains de matériau électroactif dont le diamètre (par exemple 10µm) est beaucoup plus élevé que celui des grains du matériau carboné auquel il est mélangé (par exemple 1µm).

Le composé électroactif est choisi parmi les oxydes non lithiés de métaux de transition, les oxydes lithiés de métaux de transition, et leurs mélanges; il est choisi en particulier parmi les oxydes lithiés de cobalt, de nickel, de manganèse, de vanadium, de chrome, de titane, et leurs mélanges dont le potentiel de réduction est supérieur à 3V/Li, comme CoO₂, NiO₂, MnO₂, Mn₂O₄, V₂O₅, Cr₃O₈, TiO₂, et d'autres; de préférence les oxydes lithiés (x<1) de nickel LiₓNiO₂, de cobalt LiₓCoO₂, de manganèse LiₓMnO₂, et leurs mélanges.

Le composé électroactif est choisi parmi les sulfures à intercalation et leurs mélanges, comme MoS₂, MoS₃, TiS₂, TiS₃, NiPS_{2,} NiPS_{3,} TaS₂, TaS₃, NbS₃, WS₃, et d'autres dont le potentiel de réduction est supérieur à 3 V/Li.

Selon une forme d'exécution de l'invention, le matériau carboné est choisi parmi les noirs de carbone de surface spécifique élevée (50 à 1500m²/g), et leurs mélanges.

La présence du matériau électroactif rend plus facile la mise en forme de l'électrode par rapport à une électrode ne comportant que le mélange de matériau carboné et de liant.

Selon une forme d'exécution de l'invention, le liant est choisi parmi les polymères fluorés, comme le PTFE, le PVDF etc..., les élastomères et leurs mélanges. La proportion du liant est comprise entre 2% et 30% en poids du mélange.
Le électrolyte est composé d'une "cathode liquide" classique, comprenant un solvant comme le chlorure de thionyle SOCl₂, le chlorure de sulfuryle SO₂Cl₂, et d'autres, et un sel de cation alcalin ou alcalino-terreux, comme LiAlCl₄, LiGaAlCl₄, LiGaCl₄, LiSbS₆, LiSbCl₆, Li₃SbCl₆, LiTaCl₆, LiNbCl₆, LiInCl₄, Li₂B₁₀Cl₁₀, Li₂B₁₂Cl₁₂, et d'autres. La cathode liquide peut également être les solvates LiAlCl₄/3 SO₂, ou LiAlCl₄/6 SO_{2.}

D'autres caractéristiques et avantages de la présente invention apparaîtront à la lecture des exemples qui suivent et dans le dessin annexé, donnés bien entendu à titre illustratif mais nullement limitatif.

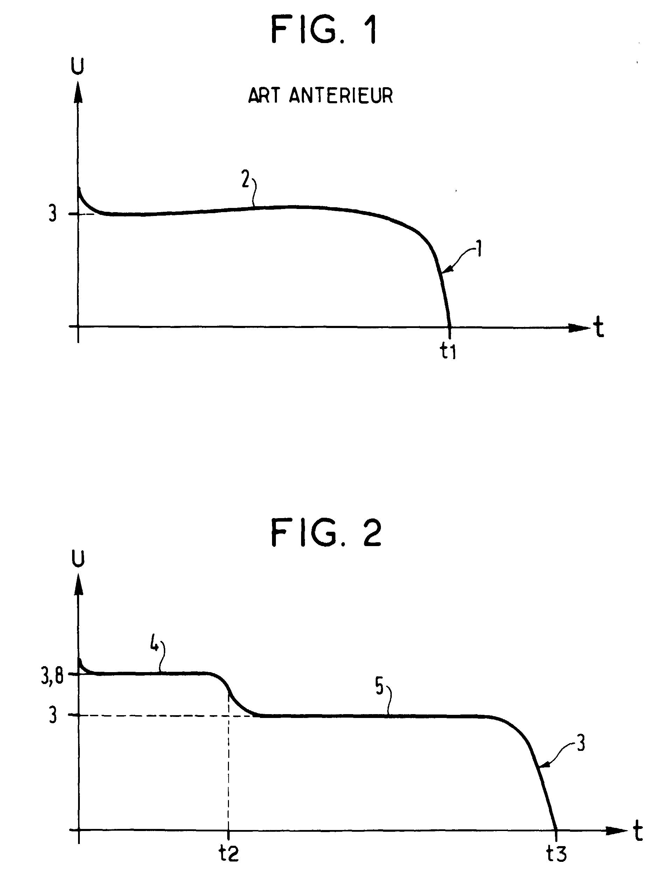

Dans le dessin annexé:
. la figure 1 représente la courbe de décharge d'une pile suivant l'art antérieur;
. la figure 2 représente la courbe de décharge d'une pile suivant l'invention.

Pour ces deux figures, U est la tension de la pile en volts, et t est le temps de décharge.

### EXEMPLE 1

### Art antérieur

Une électrode est réalisée à partir d'un mélange de 90% de noir de carbone de surface spécifique environ 1000m²/g (Ketjenblack 600) et de 10% de PTFE. Le mélange est déposé sur un support métallique, comme une grille ou un déployé. L'épaisseur de l'électrode est de 0,15mm. Une pile comportant une anode de lithium, un électrolyte LiAlCl₄/3 SO₂, et l'électrode de carbone est assemblée.

Une pile classique LiAlCl₄/3 SO₂ présente une courbe de décharge 1, visible sur la figure 1, comprenant un plateau 2 de tension qui se situe à environ 3,0V, pendant lequel la cathode liquide se réduit suivant un mécanisme réactionnel conduisant soit à Li₂S₂O₄ suivant la réaction: 2 Li⁺ + 2 SO₂ + 2 e⁻ → Li₂S₂O₄, soit à un complexe du lithium formé avec le carbone. Dans les deux cas cela conduit au colmatage rapide des pores, et la fin de la décharge se produit au bout d'un temps t₁.

Une décharge galvanostatique sous un courant de 2mA/cm² permet d'obtenir une capacité de 12mAh/cm².

### EXEMPLE 2

De la même manière que dans l'exemple 1, une électrode de même épaisseur est réalisée à partir d'un mélange de 75% d'oxyde de cobalt lithié LiₓCoO₂, de 15% de noir de carbone (Ketjenblack 600), et de 10% de PTFE, et assemblée en pile.

Sur la figure 2 est représentée une courbe de décharge 3 d'une pile LiAlCl₄/3 SO₂ suivant l'invention. Le composé électroactif est l'oxyde de cobalt lithié LiₓCoO₂. Un premier palier de tension 4 vers 3,8V est dû à la réduction avec intercalation d'ions lithium du composé électroactif pendant le temps t₂. Ensuite un second palier 5 vers 3,0V correspond à la décharge classique. La durée totale de la décharge t₃ est supérieure à la durée d'une décharge classique t₁.

Lors d'un test effectué dans les même conditions que dans l'exemple 1, la pile restitue 17mAh/cm².

### EXEMPLE 3

L'exemple 1 est reproduit mais l'électrode est réalisée à partir d'un mélange de 50% d'oxyde de cobalt lithié LiₓCoO₂, 40% de noir de carbone de grande surface (1000m²/g), et de 10% de PTFE.

La capacité déchargée dans les mêmes conditions que dans l'exemple 1 est alors de 20mAh/cm².

Bien entendu la présente invention n'est pas limitée aux modes de réalisation décrits et représentés, mais elle est suceptible de nombreuses variantes accessibles à l'homme de l'art sans que l'on ne s'écarte de l'esprit de l'invention. En particulier, on pourra sans sortir du cadre de l'invention remplacer tout moyen par un moyen équivalent.

## Revendications

1. Pile au lithium à cathode liquide comportant un électrolyte et une électrode à base de carbone, caractérisé par le fait que ladite électrode est composée d'un mélange d'un matériau carboné et d'un liant auquel est ajouté un composé électroactif dont le potentiel de réduction est supérieur à 3 Volts mesurés par rapport à une électrode de lithium et qui se réduit à un potentiel supérieur au potentiel de réduction dudit électrolyte, la proportion dudit composé électroactif étant comprise entre 10% et 80% en poids dudit mélange, et ledit composé étant choisi parmi un oxyde lithié d'un métal de transition, un sulfure à intercalation, un mélange desdits oxydes et/ou desdits sulfures, un polymère conducteur, un polymère rédox, et un mélange desdits polymères.

2. Pile au lithium selon la revendication 1, caractérisée par le fait que ledit composé électroactif est choisi parmi les oxydes lithiés de cobalt, de nickel, de manganèse, de vanadium, de chrome, de titane, et leurs mélanges.

3. Pile au lithium selon l'une des revendications précédentes, caractérisée par le fait que ledit matériau carboné est choisi parmi les noirs de carbone de surface spécifique comprise entre 50m²/g et 1500m²/g, et leurs mélanges.

4. Pile au lithium selon l'une des revendications précédentes, caractérisée par le fait que ledit liant est choisi parmi les polymères fluorés, les élastomères, et leurs mélanges.

5. Pile au lithium selon l'une des revendications précédentes, caractérisée par le fait que la proportion dudit liant est comprise entre 2% et 30% en poids dudit mélange.

6. Pile au lithium selon l'une des revendications précédentes, caractérisée par le fait que ledit électrolyte est composé d'une "cathode liquide" classique contenant un sel de cation alcalin ou alcalino-terreux.

## Patentansprüche

1. Lithium-Batterie mit Flüssigkathode, die einen Elektrolyten und eine Elektrode auf Kohlenstoffgrundlage umfaßt, **dadurch gekennzeichnet**, daß die Elektrode aus einem Gemisch eines kohlenstoffhaltigen Materials und einem Bindemittel zusammengesetzt ist, dem eine elektroaktive Verbindung zugefügt ist, deren Reduktionspotential höher als 3 V, gemessen in Bezug auf eine Lithium-Elektrode, ist, und die sich bei einem Potential oberhalb des Reduktionspotentials des Elektrolyten reduziert, wobei der Anteil der elektroaktiven Verbindung zwischen 10 Gew.-% und 80 Gew.-% des Gemischs enthalten ist und die Verbindung ausgewählt ist unter einem lithiumhaltigen Übergangsmetalloxid, einem Zwischenlagen-Sulfid, einem Gemisch dieser Oxide und/oder Sulfide, einem leitfähigen Polymer, einem Redoxpolymer und einem Gemisch dieser Polymere.

2. Lithium-Batterie nach Anspruch 1, dadurch gekennzeichnet, daß die elektroaktive Verbindung ausgewählt ist unter den lithiumhaltigen Oxiden von Kobalt, Nickel, Mangan, Vanadium, Chrom, Titan und ihren Gemischen.

3. Lithium-Batterie nach einem der vorhergehenden Ansprüche, dadurch gekennzeichnet, daß das kohlenstoffhaltige Material ausgewählt ist unter den Rußschwarzen mit spezifischer Oberfläche zwischen 50 m²/g und 1500 m²/g und ihren Gemischen.

4. Lithium-Batterie nach einem der vorhergehenden Ansprüche, dadurch gekennzeichnet, daß das Bindemittel ausgewählt ist unter den fluorierten Polymeren, den Elastomeren und ihren Gemischen.

5. Lithium-Batterie nach einem der vorhergehenden Ansprüche, dadurch gekennzeichnet, daß der Anteil des Bindemittels zwischen 2 Gew.-% und 30 Gew.-% des Gemisches enthalten ist.

6. Lithium-Batterie nach einem der vorhergehenden Ansprüche, dadurch gekennzeichnet, daß der Elektrolyt aus einer herkömmlichen "Flüssigkathode" zusammengesetzt ist, die ein Alkali- oder Erdalkalikation-Salz enthält.

## Claims

1. A liquid cathode lithium cell including an electrolyte and a carbon-based electrode, said cell being characterized by the fact that said electrode is composed of a mixture of a carbon-containing material and of a binder to which an electroactive compound is added having a reduction potential that is greater than 3 volts measured relative to a lithium electrode and which is reduced to a potential greater than the reduction potential of said electrolyte, the proportion of said electroactive compound lying in the range 10% to 80% by weight of said mixture, and said compound being chosen from a lithium-containing oxide of a transition metal, an intercalation sulfide, a mixture of said lithium-containing oxides and/or of said sulfides, a conductive polymer, a redox polymer, and a mixture of said polymers.

2. A lithium cell according to claim 1, characterized by the fact that said electroactive compound is chosen from lithium-containing of cobalt, of nickel, of manganese, of vanadium, of chromium, of titanium, and mixtures thereof.

3. A lithium cell according to any preceding claim, characterized by the fact that said carbon-containing material is chosen from carbon blacks of specific surface area lying in the range 50 m²/g to 1,500 m²/g, and mixtures thereof.

4. A lithium cell according to any preceding claim, characterized by the fact that said binder is chosen from fluoride-containing polymers, elastomers, and mixtures thereof.

5. A lithium cell according to any preceding claim, characterized by the fact that the concentration of said binder lies in the range 2% to 30% by weight of said mixture.

6. A lithium cell according to any preceding claim, characterized by the fact that said electrolyte is composed of a conventional "liquid cathode" containing an alkaline or alkaline-earth cation salt.
